# EUROPEAN PATENT SPECIFICATION

(11) **EP 3 571 393 B1**
(45) Date of publication and mention of the grant of the patent: **13.09.2023**
(21) Application number: 18709177.2
(22) Date of filing: 18.01.2018
(51) Int. Cl.: F03D 1/06, B29C 37/00

(54) **PROCESS OF USING A FINISHING SYSTEM FOR SURFACES OF A WIND TURBINE BLADE**
VERFAHREN ZUR VERWENDUNG EINES ENDBEARBEITUNGSSYSTEMS FÜR OBERFLÄCHEN EINES WINDTURBINENFLÜGELS
PROCÉDÉ D'UTILISATION D'UN SYSTÈME DE FINITION POUR LES SURFACES D'UNE PALE D'ÉOLIENNE

(30) Priority: 20.01.2017 US 201762448500 P
(43) Date of publication of application: 27.11.2019
(73) Proprietor: Illinois Tool Works Inc., Glenview, IL 60025 (US)
(72) Inventor: KOKKOT, Ranjith, Secunderabad 500 062 (IN); PANDEY, Amit, Secunderabad 500 062 (IN); DUINEVELD, Stephanus, A.n., Velserbroek 199 Nv (NL); DESHPANDE, Subodh, Secunderabad 500 078 (IN)
(74) Representative: HGF
(86) International application number: PCT/US2018/014149
(87) International publication number: WO 2018/136591

(56) References cited:
- WO-A1-2016/042143
- US-A1- 2009 220 795
- US-A1- 2015 308 404

## Description

### RELATED APPLICATIONS

This application claims priority benefit of U.S. Provisional Application Serial Number 62/448,500 filed January 20, 2017.

### FIELD OF THE INVENTION

The present invention in general relates to a process of using a finishing system for surfaces of a wind turbine blade according to claim 1.

### BACKGROUND OF THE INVENTION

Wind turbines are used to generate electricity from the kinetic power of the wind. Large blades at the front of the turbine assembly have a special curved shape, similar to the airfoil wings on a plane. When wind blows past a turbine's blades, the wind spins the blades around, and the rotational movement of the blades drives a generator that converts the kinetic energy to electrical power.

Wind turbine blades are generally made of composite materials. However, the surfaces of composite materials (for example composite materials made of glass fiber fabric or nonwoven and epoxy resin/vinyl ester resin) typically have a poor appearance and are not resistant to ultra violet light (UV) and weathering. Therefore, a surface coating is applied to the composite surfaces of the blades. Before the surface coating of epoxy resin/vinyl ester resin composite materials, composite materials must be polished and filled (levelled out), since erection of fibers often occurs during direct surface coating of the composite material. A gel coat is a resin system which can be applied onto molded parts of a composite structure for the production of smooth building component surfaces and at the same time also results in an attractive surface. However, over time, ultraviolet radiation from the sun, weather, pollution, and other environmental factors can wear away the exterior surface of the wind blades of a turbine. Existing processes for production of wind turbine blades are characterized by pore generation, multiple coating steps, and long process times including sanding. US2009220795A1 relates to composites comprising a multi-layer coating system. US20150308404A1 relates to a wind turbine blade that has a load carrying structure including at least a first spar cap and an aerodynamic shell having an outer surface forming at least part of an exterior surface of the wind turbine blade and an inner surface.

Thus, there exists a need for a wind turbine blade finishing system that is robust and reduces process time by minimizing the number of components and application steps.

### SUMMARY OF THE INVENTION

The invention is defined in the appended claims. A finishing system for surfaces of a wind turbine blade includes having a gel coat, a putty, and a top coat. A simplified application and superior performance are obtained relative to the prior art systems.

A process for finishing a surface of a wind turbine blade includes the application of a gel coat to a mold substrate, laying up of fabrics, resin infusion and curing process. After demolding, putty is applied to the outer surface of the shell in order to smooth irregular surfaces. The cured putty surface is sanded to yield a smooth finished surface. A top coat is applied to the blade surface for installation and long-term performance.

### BRIEF DESCRIPTION OF THE DRAWINGS

The present invention is further detailed with respect to the following drawings. These figures are not intended to limit the scope of the present invention but rather illustrate certain attributes thereof.
FIG. 1A shows an existing progression of process steps for wind turbine blade finishing without a gel coat;
FIG. 1B shows an existing progression of process steps for wind turbine blade finishing with a gel coat;
FIG. 1C shows the progression of a reduced number of process steps for turbine wind blade finishing with a gel coat of an embodiment of the inventive wind turbine blade finishing system;
FIGs. 2A-2C illustrate a mandrel test of a gel coat of a first and second competitor and that of an embodiment of the gel coat component of the current invention, respectively; and
FIGs. 3A and 3B show graphs of UV stability for an embodiment of the inventive top coat versus a first and a second competitor top coat, respectively.

### DETAILED DESCRIPTION OF THE INVENTION

The present invention has utility as a wind blade finishing system that is robust, cost effective, and is low in volatile organic compounds (VOC), while also reducing overall process time. Embodiments of the inventive differentiated wind blade finishing system combine a gel coat, putty and top coat and have excellent weather resistant properties, and takes the place of processes for producing turbine wind blades covered by gel coat, contouring putty, pore filler, top coat, and leading-edge coating. Embodiments of the inventive differentiated finishing system, minimize the need of sanding before applying the top coat, and in turn up to 11 hours of time associated with the sanding process, as well as preventing pin holes from showing through the surface of the wind blade without the need of a secondary product/operation thus eliminating pore filler, associated surface preparation and rework. Embodiments of the inventive differentiated finishing system reduce overall system cure time and process residence time, currently averaging 12 hours, and also reduces the number of products/steps needed to a minimum number. Overall, embodiments of the inventive differentiated wind blade finishing system reduce overall process times by over 25% by reducing the number of processing steps to applying the gel coat to a mold substrate, the laying up and infusing the resin with woven fiber cloth to form a shell with an outer surface defining a wind turbine blade. The putty is then applied to the outer uneven surfaces to form an even surface. The cured putty is then sanded to yield a smooth finished sanded surface. Finally, a top coat is applied to the blade surface. The process is particularly well suited for use with a wind turbine blade is at least 23 meters in length. The aforementioned steps can be completed in less than 25 hours for such a wind turbine blade with approximately 11hours of surface preparation and 12 hours of curing time; this in contrast to a conventional process that typically takes about 33 hours for such a blade.

As used herein, the term "substantially free" with respect to pin holes, is defined as less than 0.1 total surface area percent and in some instances less than 0.05 total area percent, as measured with a telecentric laser scanning system operating in a bright field rastering mode.

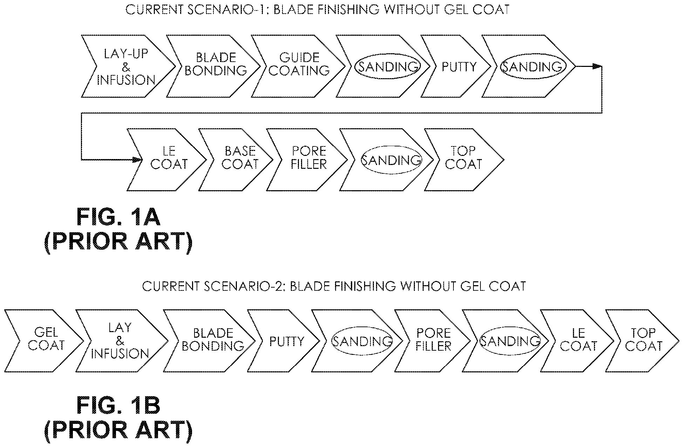

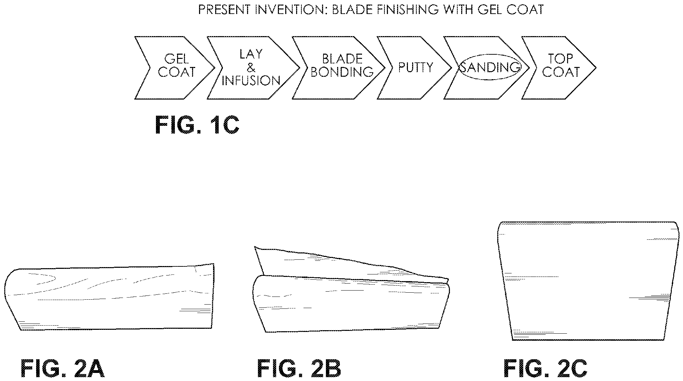

FIGs. 1A and 1B show the process steps currently involved in wind blade manufacturing for blade finishing without a gel coat and with a gel coat, respectively. FIG. 1C shows the reduction in production steps with the inventive wind blade finishing system that eliminates two or more-time consuming sanding steps. Furthermore, embodiments of the inventive differentiated finishing system address leading edge abrasion concerns either in the primary coating or via an add-on secondary coating. Table 1 list the drawbacks associated with existing blade finishing systems.

**Table 1. Process step drawbacks**

| **Process** | **Drawbacks** |
|---|---|
| Sanding | Consuming time, Consumables, 34% of total process "True Hours" spent on surface preparation |
| Putty Application | Most time-consuming steps are the putty process. Application followed by curing and sanding to obtain smooth surface finish |
| Pin Holes | Pin holes are a process and chemistry related issue, Hard to see the pores, requires pore filler which adds a sanding step |
| Pore filler process | Additional costs and time, need of additional sanding, Difficult process, sometimes ineffective and doesn't fill the pores |
| Cure time | Time consuming step, some chemistries are sensitive to environmental conditions like humidity, temperature etc., It decreases output, may need heat cure which add additional processing cost. This curing step consuming 36% of true total process hours |
| Multiple Products needed in the finishing process | Multiple components increase application time, additional material costs, time and man power |
| Durability- Abrasion/Erosion Resistance | Necessity of leading edge protection coating which increase costs, processing time and |
| | manpower |
| Weather ability | Poor UV stability induces degradation of top coat and decreased abrasion resistance. Multiple repairing processes need to be performed - hence increased maintenance cost |

Embodiments of the inventive finishing system have only three primary components gel coat, putty, and a top coat as opposed to conventional finishing systems that also have a pore filler and a leading-edge coating. The tackiness of the inventive gel coat even after more than 1 hours helps to hold fabrics while laying up the wind blade structure, which eases the fabrication process. Furthermore, embodiments of the transparent and flexible gel coat increase the durability of the applied coating under dynamic load and stress during service conditions of wind blades produced with the inventive finishing system. In addition, sanding/surface preparation is may not require on gel coat applied areas prior to the topcoat application. Embodiments of the inventive rapid curing putty, which can be sanded after 30 minutes without clogging reduces process time significantly. The "Quick dry to touch" property and long pot life of the inventive top coat also provides for a reduction in process time. The superior abrasion resistance of embodiments of the top coat also serve as a leading-edge coating for the turbine blades.

The reduced number of coating components (gel coat, putty, and top coat) in embodiments of the inventive differentiated wind blade finishing system versus currently available coating systems that have five or more coating components (gel coat, putty, pore filler, leading edge coat, base coat, etc.) result in reduced processing steps associated surface preparations required before and after the application of additional components including gel coat, pore filler, leading edge coat, etc. In fact, market segment focus (MSF) findings have revealed that, almost 34% of total process time consumed by surface preparation of wind turbine blades occurred during the coating process, which includes putty application followed by sanding, surface preparation prior to the coating, sanding after pore filler application etc. Elimination of just the sanding process saves almost 11 hours of process time per blade. The elimination of the sanding step in the present invention is made possible using a transparent gel coat as one of the components and eliminating pore filler component from present invention. Removing pore filler from the present invention will be managed by addressing pin holes with a low viscous top coat. Furthermore, proper adhesion of coating components may be achieved without any surface preparation.

A primary concern during turbine wind blade manufacturing is the generation of pinholes during the coating process. Currently, blade manufacturers eliminate these pin holes using pore fillers as a finishing component which requires an additional sanding process for a better result, but this process is sometimes inefficient to cover the pinholes and introduces additional cost to their process. Embodiments of the present invention eliminate pore filler which results in the elimination of additional sanding time and in turn over all processing time. The features of pore filler have been incorporated into the topcoat of the inventive differentiated wind blade finishing system. The inventive topcoat covers pin holes and eliminates the sanding process and the associated additional process time.

Embodiments of the inventive gel coat provide improved flexibility and mechanical properties as compared to existing gel coats. Turbine wind blades are generally manufactured out of fiber reinforced epoxy/unsaturated polymer matrices; glass fiber reinforced plastics (GFRP) that are expected to last at least 20 years in a challenging service environment. Generally, the length of the blade is around 60 meters long and to enhance the efficiency and energy yield of wind turbines, the length of the blades is being increased to 80-90 meters. The longer blades experience more deflection across the length of the blade hence increasing dynamic load and stress throughout the blade length. This adversely affects the durability of coating components and hence the protection of blades will be damaged. In order to enhance the life of coating components, flexibility of coating components especially the gel coat component has been improved in embodiments of the inventive differentiated wind blade finishing system. FIGs. 2A-2C illustrate a mandrel test of a gel coat of a first and second competitor and that of an embodiment of the gel coat component of current invention which reveals the flexibility of gel coat of current invention that is much better than the competitor grades. As is readily seen in FIGs. 2A and 2B, the first and second competitor grades cracked during the mandrel test, and the gel coat of current invention did not crack as shown in FIG. 2C.

Certain embodiments of the inventive putty have rapid curing characteristics under room temperature conditions. The rapid curing putty can be sanded after 30 minutes without clogging which reduces process time significantly as against the competitor, which can be sanded only after 120 minutes.

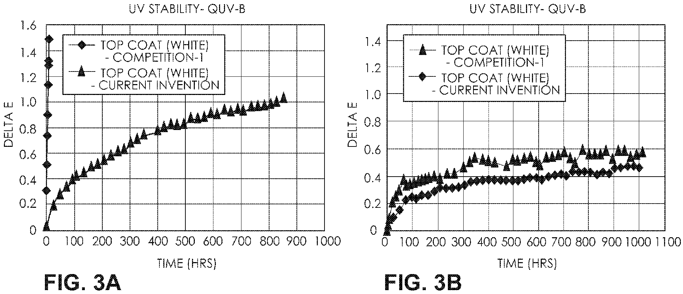

Embodiments of the inventive top coat provide excellent UV stability under QUV-B conditions and reduce maintenance costs associated with wind turbine blades having the inventive top coat. FIGs. 3A and 3B show graphs of UV stability for an embodiment of the inventive top coat versus a first and a second competitor top coat, respectively.

It is to be understood that in instances where a range of values are provided that the range is intended to encompass not only the end point values of the range but also intermediate values of the range as explicitly being included within the range and varying by the last significant figure of the range. By way of example, a recited range of from 1 to 4 is intended to include 1-2, 1-3, 2-4, 3-4, and 1-4.

### EXAMPLES

### Example 1

A specific embodiment of the inventive differentiated wind blade finishing system has three components a gel coat, putty, and a top coat. The properties of these finishing components are depicted in tables 2A, 2B, and 2C below.

**Table 2A Gel coat properties**

| **Properties of Gel coat** | | |
|---|---|---|
| **Test** | **Test Standard** | **Current invention** |
| **Pull-off adhesion Strength** | ASTM D 4541 | 7.9 MPa |
| **Mandrel Bend Test** | ASTM D 522, 12mm cylinder | No cracks |
| **Gel Time** | ASTM D3056 | 40 minute |
| **Tack Free Time** | Manual | 70 minute |

**Table 2B Putty properties**

| **Properties of Putty** | | |
|---|---|---|
| **Test** | **Test Standard** | **Current invention** |
| **Mandrel Bend Test (RT)** | ASTM D 522, 12mm cylinder | No cracking |
| **Mandrel Bend Test (-40°C)** | ASTM D 522, 63mm cylinder | No cracking |
| **Pull-off Strength** | ASTM D 4541 | 6.9 MPa |
| **Condensing water Environment** | ASTM D4585 340hrs | No blistering |
| **Gel time** | ASTM D3056 | 5-7min |
| **Cure Time/Minimum waiting time to initiate sanding** | - | 30 min |

**Table 2C Top coat properties**

| **Properties of Top coat** | | |
|---|---|---|
| **Test** | **Parameter/Standards** | **Current invention** |
| **Mandrel Bend Test** | ASTM D 522, 12mm cylinder | No cracks |
| **Adhesion X-Cut** | ASTM D3359 Method A | 5A |
| **Gloss** | 60 Degrees angle, ISO 2813 | 45 |
| **Taber abrasion (Weight loss)** | CS 10 Wheel, 1000grs weight, 2000 cycles ASTM D 4060 | 0.08g |
| **Pot life** | - | 80 min |
| **Dry to touch** | - | 65min |

Patent documents and publications mentioned in the specification are indicative of the levels of those skilled in the art to which the invention pertains.

## Claims

1. A process of using a finishing system for surfaces of a wind turbine blade, the finishing system consisting of a gel coat, a putty; and a top coat; wherein the process comprises:
applying a gel coat to a mold substrate; laying up and infusing a resin with woven fiber cloth to form a shell with an outer surface defining a wind turbine blade; applying a putty to outer uneven surfaces to form an even surface; sanding the cured putty surface to yield a smooth finished sanded surface; and applying a top coat to the blade surface.

2. The process of claim 1 wherein the wind turbine blade comprises glass fiber fabric or nonwoven and epoxy resin/vinyl ester resin.

3. The process of claim 1 wherein the surfaces are whole surfaces especially leading edges of the turbine wind blades.

4. The process of claim 1 wherein the gel coat has a pull-off adhesion strength of 7.9 MPa per ASTM D-4541.

5. The process of claim 1 wherein the gel coat has a gel time of 40 minutes per ASTM D3056.

6. The process of claim 1 wherein the gel coat has a tack free time of 70 minutes.

7. The process of claim 1 wherein the putty has a pull-off strength of 6.9 MPa per ASTM D-4541.

8. The process of claim 1 wherein the putty has a gel time of 5-7 minutes per ASTM D3056.

9. The process of claim 1 wherein the putty has a cure time/minimum waiting time to initiate sanding of 30 minutes.

10. The process of claim 1 wherein the wind turbine blade is at least 23 meters in length.

11. The process of claim 1 wherein all the steps are completed in less than 25 hours.

12. The process of claim 1 wherein the top coat is substantially free of pin holes.

## Patentansprüche

1. Verfahren zur Verwendung eines Nachbearbeitungssystems für Oberflächen eines Windturbinenblatts, wobei das Nachbearbeitungssystem aus einer Gelschicht, einem Kitt und einer Deckschicht besteht; wobei das Verfahren aufweist:
Aufbringen einer Gelschicht auf ein Formsubstrat; Auflegen und Infundieren eines Harzes mit Fasergewebe, um eine Schale mit einer Außenoberfläche zu bilden, die ein Windturbinenblatt definiert; Aufbringen eines Kitts auf äußere unebene Oberflächen, um eine ebene Oberfläche zu bilden; Schleifen der ausgehärteten Kittoberfläche, um eine glatte fertige geschliffene Oberfläche zu erhalten; und Aufbringen einer Deckschicht auf die Blattoberfläche.

2. Verfahren nach Anspruch 1, wobei das Windturbinenblatt Glasfasergewebe oder Vliesstoff und Epoxidharz/Vinylesterharz aufweist.

3. Verfahren nach Anspruch 1, wobei die Oberflächen ganze Flächen, insbesondere Vorderkanten der Windturbinenblätter, sind.

4. Verfahren nach Anspruch 1, wobei die Gelschicht eine Abziehhaftfestigkeit von 7,9 MPa gemäß ASTM D-4541 aufweist.

5. Verfahren nach Anspruch 1, wobei die Gelschicht eine Gelzeit von 40 Minuten gemäß ASTM D3056 aufweist.

6. Verfahren nach Anspruch 1, wobei die Gelschicht eine Antrocknungszeit von 70 Minuten aufweist.

7. Verfahren nach Anspruch 1, wobei der Kitt eine Abziehfestigkeit von 6,9 MPa gemäß ASTM D-4541 aufweist.

8. Verfahren nach Anspruch 1, wobei der Kitt eine Gelzeit von 5-7 Minuten gemäß ASTM D3056 aufweist.

9. Verfahren nach Anspruch 1, wobei der Kitt eine Aushärtezeit/Mindestwartezeit von 30 Minuten aufweist, um mit dem Schleifen zu beginnen.

10. Verfahren nach Anspruch 1, wobei das Windturbinenblatt zumindest 23 Meter lang ist.

11. Verfahren nach Anspruch 1, wobei alle Schritte in weniger als 25 Stunden abgeschlossen werden.

12. Verfahren nach Anspruch 1, wobei die Deckschicht im Wesentlichen frei von Nadellöchern ist.

## Revendications

1. Procédé d'utilisation d'un système de finition pour les surfaces d'une pale d'éolienne, le système de finition étant constitué d'une couche de gel, d'un mastic ; et d'une couche de finition ; dans lequel le procédé comprend :
l'application d'une couche de gel sur un substrat de moule ; l'application et l'infusion d'une résine avec un tissu de fibres tissées pour former une coque avec une surface externe définissant une pale d'éolienne ; l'application d'un mastic sur des surfaces extérieures irrégulières pour former une surface régulière ; le ponçage de la surface de mastic durcie pour obtenir une surface poncée finie lisse ; et l'application d'une couche supérieure sur la surface de la pale.

2. Procédé selon la revendication 1, dans lequel la pale d'éolienne comprend un tissu en fibres de verre ou un non-tissé et une résine époxy/résine d'ester vinylique.

3. Procédé selon la revendication 1, dans lequel les surfaces sont des surfaces entières, en particulier des bords d'attaque des pales de turbine.

4. Procédé selon la revendication 1, dans lequel le revêtement de gel a une force d'adhérence à l'arrachement de 7,9 MPa selon ASTM D-4541.

5. Procédé selon la revendication 1, dans lequel la couche de gel a un temps de gélification de 40 minutes selon la norme ASTM D3056.

6. Procédé selon la revendication 1, dans lequel la couche de gel a un temps de libération de collant de 70 minutes.

7. Procédé selon la revendication 1, dans lequel le mastic a une résistance à l'arrachement de 6,9 MPa selon ASTM D-4541.

8. Procédé selon la revendication 1, dans lequel le mastic a un temps de gélification de 5-7 minutes selon la norme ASTM D3056.

9. Procédé selon la revendication 1, dans lequel le mastic a un temps de durcissement/temps d'attente minimum pour commencer le ponçage de 30 minutes.

10. Procédé selon la revendication 1, dans lequel la pale d'éolienne a une longueur d'au moins 23 mètres.

11. Procédé selon la revendication 1, dans lequel toutes les étapes sont achevées en moins de 25 heures.

12. Procédé selon la revendication 1, dans lequel le revêtement supérieur est sensiblement exempt de trous d'épingle.
